# EUROPEAN PATENT APPLICATION

(11) **EP 4 333 161 A1**
(43) Date of publication of application: **06.03.2024**
(21) Application number: 23185353.2
(22) Date of filing: 13.07.2023
(51) Int. Cl.: H01M 10/613, H01M 10/6562, H01M 50/204, H01M 50/244, H01M 50/367

(54) **ENERGY STORAGE APPARATUS**

(30) Priority: 01.09.2022 CN 202222344863 U
(71) Applicant: Sungrow Power Supply Co., Ltd., Hefei, Anhui 230088 (CN)
(72) Inventor: GAO, Yuan, Hefei (CN); XU, Wenjun, Hefei (CN); HE, Wei, Hefei (CN)
(74) Representative: Zacco Norway AS

(57) **Abstract**

An energy storage apparatus is provided. The energy storage apparatus includes: a support structure, which is provided with at least one support layer in a height direction of the support structure; an energy storage device, an air outlet is defined at the top of the energy storage device, and an air inlet is defined on a sidewall of the energy storage device, where the number of the energy storage device is at least two, the energy storage devices are arranged in at least two layers through the support layer, and the support layer between adjacent layers of energy storage devices is hollowed out or configured in a partitioning manner; and an air guide structure mounted on the energy storage device and in communication with an air inlet of the energy storage device, the air guide structure is configured to guide air from a position away from the air outlet of the energy storage device having the air guide structure or away from an air outlet of an adjacent energy storage device, thereby reducing the amount of heat of hot air that is discharged from the air outlet of the energy storage device and enters the air inlet of the energy storage device in an upper layer or the same layer, thereby avoiding affecting the normal operation of the energy storage device.

## Description

### FIELD

The present application relates to the technical field of heat dissipation of an energy storage device, and in particular to an energy storage apparatus.

### BACKGROUND

In the application of an energy storage apparatus, it is usually required to stack energy storage devices in double layers in a case of a limited space. However, a temperature control unit or a power conversion unit of each of the energy storage devices usually needs to dissipate heat through air intake and exhaust.

At present, the energy storage device usually has a horizontal air inlet at a side wall and an air outlet at the top. When the energy storage devices are stacked in double layers, the heat discharged from a lower energy storage device will be sucked by the air inlet of an upper energy storage device, thereby affecting the normal operation of the apparatus.

### SUMMARY

In view of this, an object of the present application is to provide an energy storage apparatus, which aims to reduce the heat discharged from an energy storage device to an energy storage device that locates at an upper layer or an energy storage device that locates at the same layer, so as to avoid affecting the normal operation of the energy storage device that locates at an upper layer or the energy storage device that locates at the same layer.

In order to achieve the above object, the following technical solutions are provided according to the present application.

An energy storage apparatus includes a support structure, an energy storage device and an air guide structure.

The support structure is provided with at least one support layer in a height direction of the support structure.

An air outlet is defined at the top of the energy storage device, and an air inlet is defined on a sidewall of the energy storage device, where the number of the energy storage device is at least two, the at least two energy storage devices are arranged in at least two layers through the at least one support layer, and the support layer between adjacent layers of energy storage devices is hollowed out or configured in a partitioning manner.

The air guide structure is mounted on the energy storage device and is in communication with the air inlet of the energy storage device, where the air guide structure is configured to guide air from a position away from the air outlet of the energy storage device having the air guide structure or away from an air outlet of an adjacent energy storage device.

In an embodiment, the support layer between the adjacent layers of energy storage devices is hollowed out, and the air guide structure is at least arranged on a sidewall of the energy storage device that locates at a layer except a bottom layer, and an air inlet of the air guide structure arranged at the energy storage device that locates at a layer except a bottom layer is defined at one end, away from the energy storage device that locates at a bottom layer, of the air guide structure.

In another embodiment, the support layer between the adjacent layers of energy storage devices is configured in a partitioning manner, and the air guide structure is at least arranged on a sidewall of the energy storage device that locates at a layer except a top layer, and an air inlet of the air guide structure is defined at one end away from the energy storage device in a top layer.

In another embodiment, the air guide structure includes an air guide hood.

An air outlet of the air guide structure is arranged at one side of the air guide hood, the side, on which the air outlet is defined, of the air guide hood is fixed to the energy storage device, and the air outlet of the air guide hood surrounds the air inlet of the energy storage device.

An air inlet of the air guide structure is arranged on the air guide hood.

In another embodiment, a first end of the air guide hood is provided with a first inclined surface, the first inclined surface is inclined towards a direction away from a second end of the air guide hood along a direction approaching the air outlet of the air guide hood, and an air inlet of the air guide hood is defined on the first inclined surface.

In another embodiment, the second end of the air guide hood is provided with a second inclined surface, and the second inclined surface is inclined towards a direction away from the first end of the air guide hood along a direction approaching the air outlet of the air guide hood.

In another embodiment, a maintenance opening is defined on the second inclined surface of the air guide hood, and an openable and closable maintenance door is mounted at the maintenance opening.

In another embodiment, the air guide structure further includes a first protective mesh and/or a first filter and/or a first louver mounted at the air inlet of the air guide hood.

In another embodiment, in a case that the air guide hood is mounted on the energy storage device, at least a bottom of two ends of the air guide hood is provided with a sewage outlet, and an openable and closable sewage discharge door is hermetically mounted at the sewage outlet.

In another embodiment, the air guide structure includes an air shield plate arranged on the energy storage device.

The air shield plate is configured to separate the air inlet of the energy storage device having the air shield plate from the air outlet of the energy storage device having the air shield plate or the air outlet of the adjacent energy storage device.

The various embodiments according to the present application can be arbitrarily combined as required, and the embodiments obtained from these combinations also fall within the scope of the present application and are a part of the specific embodiments of the present application.

In the energy storage apparatus according to the present application, the energy storage devices are supported by providing the support layer on the support structure in the height direction, so as to realize the arrangement of the energy storage devices in layers. The air guide structure is mounted on the energy storage device, and the air guide structure can guide air from a position away from the air outlet of the energy storage device having the air guide structure or away from the air outlet of the adjacent energy storage device, thereby reducing the amount of heat of hot air that is discharged from the air outlet of the energy storage device and enters the air inlet of the energy storage device in an upper layer or the same layer, thereby avoiding affecting the normal operation of the energy storage device.

### BRIEF DESCRIPTION OF THE DRAWINGS

For more clearly illustrating the technical solutions in the embodiments of the present application or in the conventional technology, the accompanying drawings used in the description of the embodiments or the conventional technology will be briefly described hereinafter. Apparently, the accompanying drawings described hereinafter illustrate only embodiments of the present application, and other drawings can be obtained by those skilled in the art based on the drawings without any creative efforts.
FIG. 1 is schematic sectional view showing the structure of an energy storage apparatus according to a first embodiment of the present application;
FIG. 2 is a schematic left sectional view showing the structure of the energy storage apparatus in FIG. 1;
FIG. 3 is a schematic sectional view showing the structure of an energy storage apparatus according to a second embodiment of the present application;
FIG. 4 is a schematic left sectional view showing the structure of the energy storage apparatus in FIG. 3;
FIG. 5 is a schematic view showing the three-dimensional structure of an air guide structure according to an embodiment of the present application;
FIG. 6 is a schematic front view showing the structure of the air guide structure in FIG. 5;
FIG. 7 is a schematic view showing the three-dimensional structure of an air guide structure according to another embodiment of the present application;
FIG. 8 is a schematic view showing the three-dimensional structure of an energy storage device on which an air guide structure is mounted according to a third embodiment of the present application;
FIG. 9 is a schematic structural view of the air guide structure in FIG. 8; and
FIG. 10 is a schematic view showing the three-dimensional structure of an energy storage device on which an air guide structure is mounted according to a fourth embodiment of the present application.

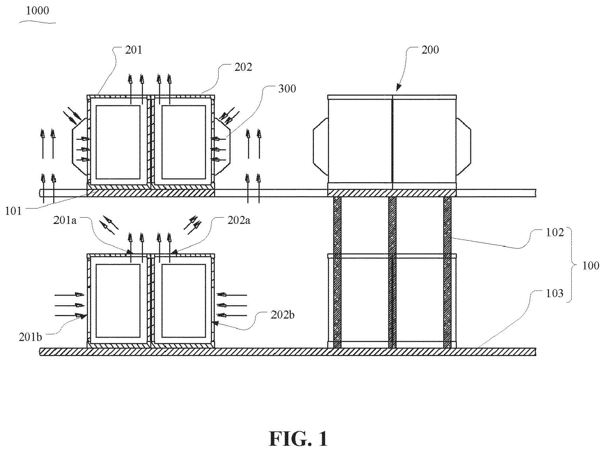

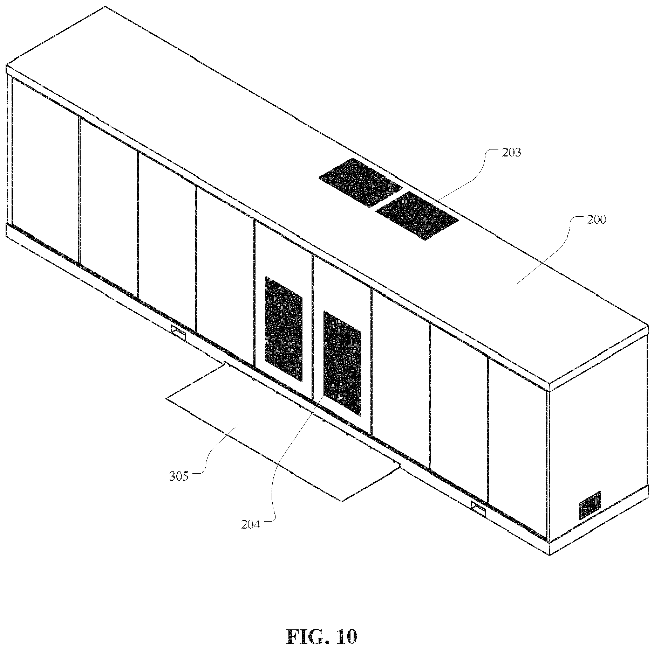

Reference numerals are listed as follows in FIG. 1 to FIG. 10:

| | | | |
|---|---|---|---|
| 1000. | energy storage apparatus; | 100. | support structure; |
| 200. | energy storage device; | 300. | air guide structure; |
| 101. | support portion; | 102. | support frame; |
| 103. | support plate; | 301. | air guide hood; |
| 301a. | first inclined surface; | 301b. | second inclined surface; |
| 302. | maintenance door; | 303. | sewage discharge door; |
| 304. | first protective mesh; | 201. | first energy storage component; |
| 202. | second energy storage component; | 201a. | first air outlet; |
| 202a. | second air outlet; | 201b. | first air inlet; |
| 202b. | second air inlet; | 203. | second protective mesh; |
| 204. | third protective mesh; | 305. | air shield plate. |

### DETAILED DESCRIPTION OF THE EMBODIMENTS

The technical solutions in the embodiments of the present application will be described clearly and completely hereinafter in conjunction with FIG. 1 to FIG. 10 in the embodiments of the present application. It is apparent that the described embodiments are only a part of the embodiments according to the present application, rather than all of the embodiments. Based on the embodiments of the present application, all other embodiments obtained by those skilled in the art without creative efforts shall fall within the scope of protection of the present application.

In the description of the present application, it should be understood that the orientation or positional relationship indicated by the terms, such as "upper", "lower", "top face" and "bottom face", are based on the orientation or positional relationship shown in the drawings, which are only to facilitate the description of the present application and to simplify the description, rather than indicating or implying that the device or element referred to must have a specific orientation, or can only be configured and operated in a particular orientation. Therefore, the above-mentioned terms should not be construed as a limitation to the present application. In addition, the terms "first", "second" and the like are for purpose of description, and should not be construed as indicating or implying relative importance.

As shown in FIG. 1 to FIG. 10, an energy storage apparatus 1000 is provided according to a first aspect of the present application, the energy storage apparatus 1000 may reduce the heat discharged from an energy storage device 200 into an energy storage device 200 that locates at an upper layer or an energy storage device 200 that locates at the same layer, so as to avoid affecting the normal operation of the energy storage device 200 that locates at an upper layer or the energy storage device 200 that locates at the same layer.

As shown in FIG. 1 to FIG. 4, the energy storage apparatus 1000 includes a support structure 100, an energy storage device 200 and an air guide structure 300. The support structure 100 is configured to support the energy storage device 200 in layers to reduce the occupied area.

Specifically, the support structure 100 is provided with at least one support layer in a height direction of the support structure 100. It can be understood that, the support structure 100 is required to have sufficient strength to support the energy storage device 200, and may be composed of steel parts or iron parts. Any structures that can support the energy storage device 200 in layers fall within the scope of protection of the present application.

The support structure 100 includes a support frame 102 and support plates 103. The support frame 102 is a rectangular frame body configured in layers, and the support plates 103 are respectively laid on layers of the rectangular frame body to form a support layer. On one hand, the support layer is used to support the energy storage device 200, and on the other hand, the support layer may be used for facilitating maintaining and moving. It can be understood that the specific structure of the support structure 100 disclosed above is only a specific embodiment of the present application, and in practical application, the support structure 100 may also be configured as a structure of other shapes.

An air outlet is defined at the top of the energy storage device 200, and an air inlet is defined on a sidewall of the energy storage device 200. The number of the energy storage device 200 is at least two, and the at least two energy storage devices 200 are respectively arranged on layers of the support structure 100. The support layer between adjacent layers of energy storage devices 200 is hollowed out or configured in a partitioning manner. It should be noted here that the structure of any support structure 100 that locates at a lowermost support layer is not limited to being the same as the structure of each of support layers above the lowermost support layer. In other words, when the lowermost support layer in the same support structure 100 is hollowed out, all the support layers above the lowermost support layer may be hollowed out or configured in a partitioning manner; and when the lowermost support layer in the same support structure 100 is configured in a partitioning manner, all the support layers above the lowermost support layer may be hollowed out or configured in a partitioning manner.

It should be understood that, it is not limited to that all the energy storage devices 200 are arranged on the support layers, one layer of energy storage device 200 may further be arranged on the ground, and other layers of energy storage devices 200 may be arranged on the support layers respectively. In a case that the support structure 100 is provided with a support layer in the height direction of the support structure 100, the support layer may be arranged at a certain distance from the ground, and a layer of energy storage device 200 may be arranged on the ground, and a layer of energy storage device 200 may be arranged on the supporting layer, so as to divide the energy storage devices 200 into at least two layers through the support layer.

The air guide structure 300 is mounted on the energy storage device 200 and is in communication with the air inlet of the energy storage device 200. The air guide structure 300 is configured to guide the air from a position away from the air outlet of the energy storage device 200 having the air guide structure 300 or away from an air outlet of an adjacent energy storage device 200. The air guide structure 300 is mounted on the energy storage device 200, and the air guide structure 300 can guide air from a position away from the air outlet of the energy storage device 200 having the air guide structure 200 or away from the air outlet of the adjacent energy storage device 200, thereby reducing the amount of the hot air that is discharged from the air outlet of the energy storage device 200 and enters the air inlet of the energy storage device 200 in an upper layer or the same layer, thereby avoiding affecting the normal operation of the energy storage device 200.

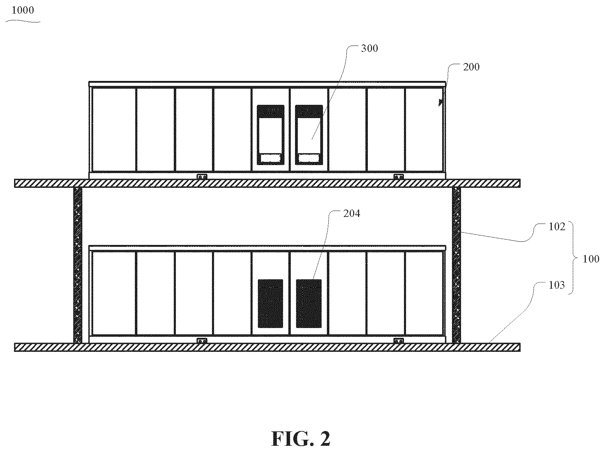

Specifically, in a case that the support layer between adjacent layers of energy storage devices 200 is hollowed out, the air guide structure 300 is at least arranged on a sidewall of the energy storage device 200 that locates at a layer except a bottom layer, as shown in FIG. 1 and FIG. 2. In other words, in a case that the support layer between adjacent layers of energy storage devices 200 is hollowed out, the sidewall of each layer of energy storage device 200 in one energy storage apparatus 1000 may be provided with an air guide structure 300; alternatively, the air guide structure 300 may be arranged on the sidewalls of all other layers of energy storage devices 200 except for the sidewall of the energy storage device 200 that locates at a lowest layer. Of course, the sidewall of the energy storage device 200 that locates at a lowest layer may also be provided with an air guide structure 300.

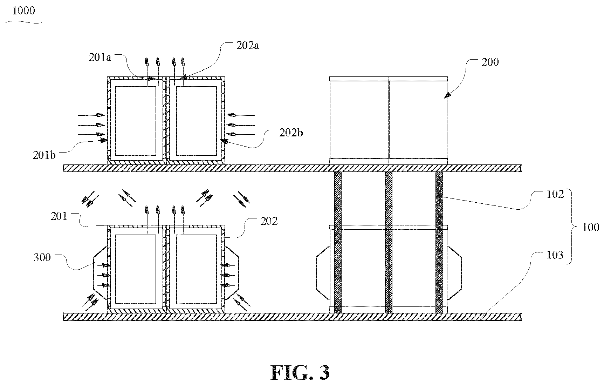

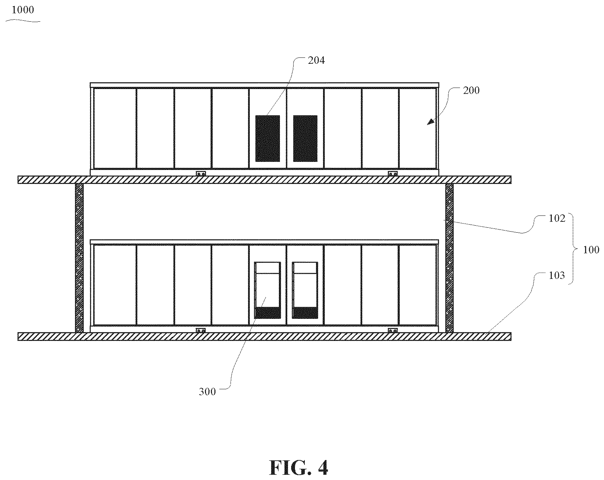

In a case that the support layer between the adjacent layers of energy storage devices 200 is configured in a partitioning manner, the air guide structure 300 is at least arranged on the sidewall of the energy storage devices 200 below each partition layer, as shown in FIG. 3 and FIG. 4, thereby reducing the amount of hot air that is discharged from the air outlet of the energy storage device 200 and enters the air inlet of the energy storage device 200, and avoiding affecting the normal operation of the energy storage device 200 in each layer. In other words, in a case that the support layer between the adjacent layers of energy storage devices 200 is configured in a partitioning manner, the sidewall of each layer of energy storage device 200 in one energy storage apparatus 1000 may be provided with an air guide structure 300; alternatively, the air guide structure 300 may also be arranged on the sidewalls of all other layers of energy storage devices 200 except for the sidewall of the energy storage device 200 that locates at an uppermost layer. Of course, the sidewall of the energy storage device 200 that locates at an uppermost layer may also be provided with an air guide structure 300.

It should be noted that the support layer being hollowed out means that the support layer is provided with a through hole. In this case, the hot air discharged by the energy storage device 200 that locates at a lower layer can be discharged upwards through the through hole in the support layer, as shown in FIG. 1. The support layer being configured in a partitioning manner means that the support layer is of a closed structure. The hot air discharged by the energy storage device 200 that locates at a lower layer cannot be discharged upwards through the support layer, and can only escape from the periphery of a chamber enclosed by adjacent support layers along a bottom surface of the support layer, as shown in FIG. 3.

In some embodiments, in a case that the support layer is hollowed out, a support portion 101, configured to support a bottom of each energy storage device 200, of the support layer is configured in a partitioning manner, which, on the one hand, increases the support strength for the energy storage device 200, and on the other hand, the support portion 101 isolates the hot air discharged from the energy storage device 200 below the support portion 101, thereby reducing or completely preventing the hot air from being directly blown to the energy storage device 200 located above the support portion 101.

Still further, a projection of the energy storage device 200 towards the support portion 101 at least completely falls into the support portion 101, that is, the support portion 101 completely protects the energy storage device 200 supported by the support portion 101 from being directly blown by the hot air below the support portion 101.

It should be noted that the support portion 101 may be a hollow chamber structure or a solid plate-like structure.

Still further, the present application discloses that in a direction from the bottom to the top of the support structure 100, two sides of the support portion 101 are inclined in a direction away from each other, and two sides of the support plate 103 are obliquely arranged, which acts to guide the hot air flowing through the sidewall of the support plate 103, so that the hot air flows towards a direction away from the energy storage device 200 supported by the support plate 103 after flowing through the sidewall of the support plate 103, further reducing the heat of the lower hot air flowing into the energy storage device 200 in the upper layer.

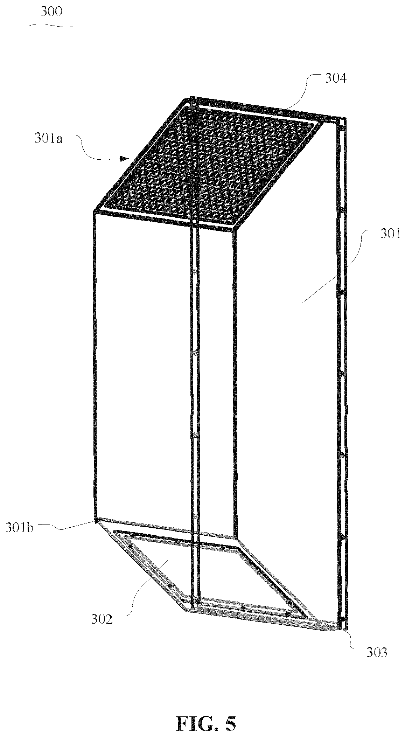

In some embodiments, as shown in FIG. 5 to FIG. 9, the air guide structure 300 includes an air guide hood 301, and an air outlet of the air guide structure 300 is arranged at one side of the air guide hood 301. That is, the air outlet on the air guide hood 301 is provided as the air outlet of the air guide structure 300, the side, on which the air outlet is defined, of the air guide hood 301 is fixed to the energy storage device 200, and the air outlet of the air guide hood 301 surrounds the air inlet of the energy storage device 200. Specifically, the air outlet of the air guide hood 301 is circumferentially provided with a flange, and the flange is detachably connected to the sidewall of the energy storage device 200 through fasteners such as screws.

An air inlet of the air guide structure 300 is defined on the air guide hood 301, and the air inlet may be defined on the sidewall, away from the air outlet, of the air guide hood 301, or on a top surface or a bottom surface of the air guide hood 301. The air guide structure 300 can be installed according to actual needs.

As shown in FIG. 1, the support layer is hollowed out, and the air guide hood 301 is mounted on the energy storage device 200 that locates at an upper layer. The air inlet is defined at the top of the air guide hood, that is, the air inlet of the air guide hood 301 is arranged away from the air outlet of the energy storage device 200 that locates at a lower layer, that is, the air inlet of the air guide hood 301 faces away from the energy storage device 200 that locates at a lower layer, thereby effectively reducing the amount of the hot air that is discharged from the energy storage device 200 that locates at a lower layer and enters the energy storage device 200 that locates at an upper layer, and avoiding affecting the normal operation of the energy storage device 200 that locates at an upper layer.

As shown in FIG. 3, the support layer is configured in a partitioning manner, the air guide hood is mounted on the energy storage device 200 that locates at a lower layer, and the air inlet is defined at the bottom of the air guide hood, i.e. the air inlet of the air guide hood is arranged away from the air outlet of the energy storage device 200 in the same layer, thus effectively reducing the amount of the hot air that is discharged from the energy storage device 200 in the same layer and enters the energy storage device 200 in the same layer, and avoiding affecting the normal operation of the energy storage device 200.

Further, the present application discloses that a first end of the air guide hood 301 is provided with a first inclined surface 301a, the first inclined surface 301a is inclined towards a direction away from a second end of the air guide hood 301 along a direction approaching the air outlet of the air guide hood 301. As shown in FIG. 5, taking the first inclined surface 301a being provided at the top of the air guide hood as an example, the provision of the first inclined surface 301a can prevent snow or foreign objects from accumulating on the air guide hood.

Further, the present application discloses that the air inlet of the air guide hood 301 is defined on the first inclined surface 301a.

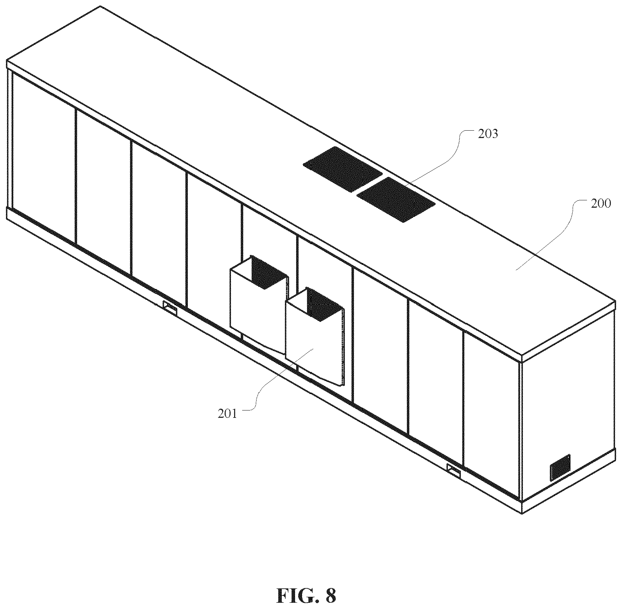

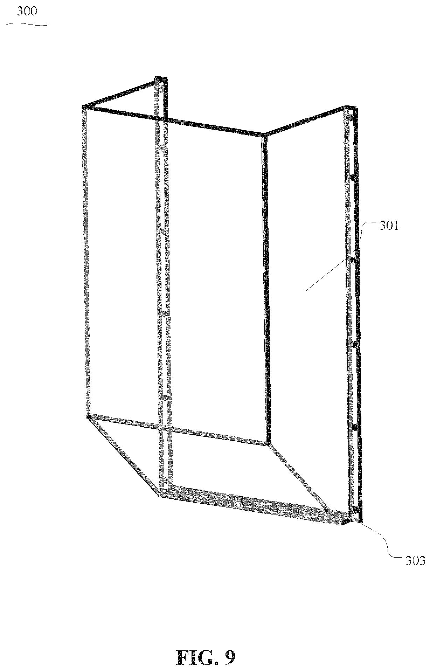

It should be noted that the first end of the air guide hood 301 may not be provided with the first inclined surface 301a, and the top of the air guide hood 301 may be provided as a flat surface, and the air inlet of the air guide hood 301 may be defined at the top of the air guide hood 301, as shown in FIG. 8 and FIG.9.

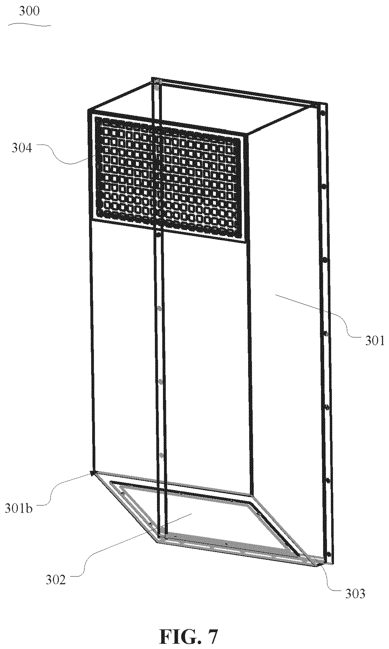

Of course, alternatively, the air inlet of the air guide hood 301 may be defined on the sidewall, facing the air outlet of the air guide hood 301, of the air guide hood 301, as shown in FIG. 7.

In some embodiments, as shown in FIG. 5, FIG.7 and FIG.9, the present application discloses that a second end of the air guide hood 301 is provided with a second inclined surface 301b, and the second inclined surface 301b is inclined towards a direction away from the first end of the air guide hood 301 along a direction approaching the air outlet of the air guide hood 301.

In a case that the air is blown in from the top of the air guide hood 301, the first end of the air guide hood 301 is the top and the second end of the air guide hood 301 is the bottom. The second end of the air guide hood 301 is provided with the second inclined surface 301b, the second inclined surface 301b is inclined towards the direction away from the first end of the air guide hood 301 along the direction approaching the air outlet of the air guide hood 301, and thus the hot air discharged from the energy storage device 200 in the lower layer can move away from the energy storage device 200 in the upper layer through the guiding of the second inclined surface 301b, thereby further reducing the amount of the hot air that is discharged from the energy storage device 200 that locates at a lower layer and enters the energy storage device 200 that locates at an upper layer.

In a case that the air is blown in from the bottom of the air guide hood 301, the first end of the air guide hood 301 is the bottom and the second end of the air guide hood 301 is the top.

Further, the present application discloses that the second inclined surface 301b of the air guide hood 301 is provided with a maintenance opening, and an openable and closable maintenance door 302 is mounted at the maintenance opening, which facilitates the maintenance of the energy storage device 200 by opening and closing the maintenance door 302. It should be noted that one side of the maintenance door 302 may be hinged on the air guide hood 301, and the other side of the maintenance door 302 may be snaped or locked on the air guide hood 301. The maintenance door 302 may also be detachably mounted on the air guide hood 301 as a whole by fasteners.

In order to facilitate the discharge of foreign objects in the air guide hood 301 and prevent the foreign objects from entering the energy storage device 200 and affecting the energy storage device 200, the present application discloses that in a case that the air guide hood 301 is mounted on the energy storage device 200, at least the bottom of two ends of the air guide hood 301 is provided with a sewage outlet, and an openable and closable sewage discharge door 303 is hermetically mounted at the sewage outlet. Specifically, one side of the sewage discharge door 303 may be hinged on the air guide hood 301, and the other side of the sewage discharge door 303 may be snaped or locked on the air guide hood 301. The sewage discharge door 303 may also be detachably mounted on the air guide hood 301 as a whole by fasteners.

In order to reduce the foreign objects entering the air guide hood 301, the present application discloses that the air guide structure 300 further includes a first protective mesh 304 and/or a first filter and/or a first louver mounted at the air inlet of the air guide hood 301.

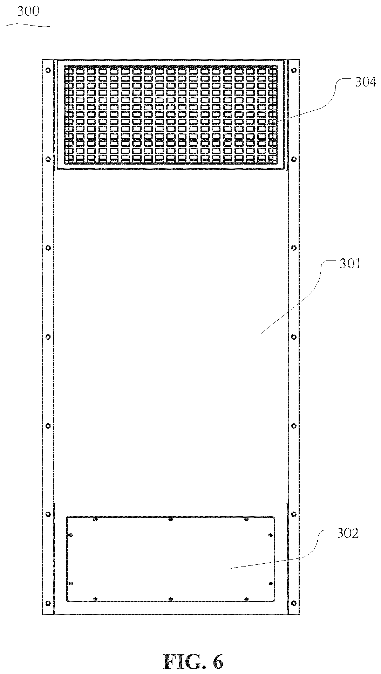

In some other embodiments, as shown in FIG. 6, the present application discloses that the air guide structure 300 includes an air shield plate 305 arranged on the energy storage device 200, and the air shield plate 305 is configured to separate the air inlet of the energy storage device 200 having the air shield plate 305 from the air outlet of the energy storage device 200 having the air shield plate 305 or the air outlet of the adjacent energy storage device 200.

Specifically, in a case that the support layer is hollowed out, the air shield plate 305 is at least arranged on the energy storage device 200 that locates at an upper layer and is located below the air inlet of the energy storage device 200, so as to separate the air inlet of the energy storage device 200 that locates at an upper layer from the air outlet of the energy storage device 200 that locates at a lower layer. In order to further reduce the amount of hot air entering the energy storage device 200 that locates at the upper layer, an air shield plate 305 may also be mounted above the air inlet of the energy storage device 200 that locates at an upper layer to separate the air outlet of the energy storage device 200 and the air inlet of the energy storage device 200.

In a case that the support layer is configured in a partitioning manner, the air shield plate 305 is at least arranged on the energy storage device 200 that locates at a lower layer, specifically, the air shield plate 305 is located above the air inlet of the energy storage device 200 in the layer, to separate the air outlet of the energy storage device 200 from the air inlet of the energy storage device 200.

In some embodiments, the energy storage device 200 includes a first energy storage component 201 and a second energy storage component 202 abutted against the first energy storage component 201, as shown in FIG. 1 and FIG. 2.

The air outlet of the energy storage device 200 includes a first air outlet 201a and a second air outlet 202a respectively defined at the top of the first energy storage component 201 and the top of the second energy storage component 202. The first air outlet 201a is defined at a side, closer to the second energy storage component 202, on the top of the first energy storage component 201, and the second air outlet 202a is defined at a side, closer to the first energy storage component 201, on the top of the second energy storage component 202. The air inlet of the energy storage device 200 includes a first air inlet 201b and a second air inlet 202b respectively defined on the sidewall of the first energy storage component 201 and the sidewall of the second energy storage component 202. The first air inlet 201b is defined on a side, away from the second energy storage component 202, of the first energy storage component 201, and the second air inlet 202b is defined on a side, away from the first energy storage component 201, of the second energy storage component 202. That is, both the first air inlet 201b and the second air inlet 202b are away from the first air outlet 201a and the second air outlet 202a, further reducing the backflow of the hot air discharged from the first air outlet 201a and the second air outlet 202a to the first air inlet 201b and the second air inlet 202b.

In order to prevent impurities from entering the energy storage device 200, a second protective mesh 203 may be mounted at the air outlet of the energy storage device 200.

In order to prevent impurities, or the like, from entering the energy storage device 200 without the air guide hood 301, the present application discloses that a third protective mesh 204 is mounted at the air inlet of the energy storage device 200 without the air guide hood 301.

It should be noted that the words indicating the orientation in this specification, such as "upper" and "lower", are all set in the direction of FIG. 1, which are only for the convenience of description and do not have other specific meanings.

The various embodiments in the specification are described in a progressive manner, each of the embodiments is mainly focused on describing its difference from other embodiments, and reference may be made among these embodiments with respect to the same or similar parts.

With the above descriptions of the disclosed embodiments, those skilled in the art can implement or practice the present application. Various modifications to these embodiments will be apparent to those skilled in the art, and the general principle herein can be implemented in other embodiments without departing from the spirit or scope of the present application. Therefore, the present application is not limited to the embodiments described herein, but confirms to a widest scope in accordance with principles and novel features disclosed herein.

In the description of this specification, description with reference to the terms "one embodiment", "example", "specific example", etc. means that specific features, structures, materials or characteristics described in conjunction with this embodiment or example are included in at least one embodiment or example of the present application. In the specification, the schematic expressions of the above terms do not necessarily refer to the same embodiment or example. Furthermore, the specific features, structures, materials or characteristics described may be combined in any one or more embodiments or examples in a suitable manner.

The preferred embodiments of the present application disclosed above are only used to assist explaining the present application. The preferred embodiments do not describe all the details in detail, and are not intended to limit the present application to the specific embodiments. Apparently, numerous modifications and variations may be made based on the content of the specification. The embodiments are selected and described in the specification to explain the principle and practical applications of the present application well, so that those skilled in the art can make good use and understanding of the present application. The present application is limited only by the claims, full scope and equivalents thereof.

## Claims

1. An energy storage apparatus (1000), comprising:
a support structure (100), which is provided with at least one support layer in a height direction of the support structure (100);
an energy storage device (200), wherein an air outlet is defined at the top of the energy storage device (200), and an air inlet is defined on a sidewall of the energy storage device (200), wherein the number of the energy storage device (200) is at least two, the at least two energy storage devices (200) are arranged in at least two layers through the at least one support layer, and the support layer between adjacent layers of energy storage devices (200) is hollowed out or configured in a partitioning manner; and
an air guide structure (300) mounted on the energy storage device (200) and in communication with the air inlet of the energy storage device (200), wherein the air guide structure (300) is configured to guide air from a position away from the air outlet of the energy storage device (200) having the air guide structure (300) or away from an air outlet of an adjacent energy storage device (200).

2. The energy storage apparatus (1000) according to claim 1, wherein the support layer between the adjacent layers of energy storage devices (200) is hollowed out, and the air guide structure (300) is at least arranged on a sidewall of the energy storage device (200) that locates at a layer except a bottom layer.

3. The energy storage apparatus (1000) according to claim 1, wherein the support layer between the adjacent layers of energy storage devices (200) is configured in a partitioning manner, and the air guide structure (300) is at least arranged on a sidewall of the energy storage device (200) that locates at a layer except a top layer.

4. The energy storage apparatus (1000) according to any one of claims 1 to 3, wherein the air guide structure (300) comprises an air guide hood (301),
an air outlet of the air guide structure (300) is arranged at one side of the air guide hood (301), the side, on which the air outlet is defined, of the air guide hood (301) is fixed to the energy storage device (200), and the air outlet of the air guide hood (301) surrounds the air inlet of the energy storage device (200), and
an air inlet of the air guide structure (300) is arranged on the air guide hood (301).

5. The energy storage apparatus (1000) according to claim 4, wherein a first end of the air guide hood (301) is provided with a first inclined surface (301a), the first inclined surface (301a) is inclined towards a direction away from a second end of the air guide hood (301) along a direction approaching the air outlet of the air guide hood (301), and an air inlet of the air guide hood (301) is defined on the first inclined surface (301a).

6. The energy storage apparatus (1000) according to claim 5, wherein the second end of the air guide hood (301) is provided with a second inclined surface (301b), and the second inclined surface (301b) is inclined towards a direction away from the first end of the air guide hood (301) along a direction approaching the air outlet of the air guide hood (301).

7. The energy storage apparatus (1000) according to claim 6, wherein a maintenance opening is defined on the second inclined surface (301b) of the air guide hood (301), and an openable and closable maintenance door (302) is mounted at the maintenance opening.

8. The energy storage apparatus (1000) according to claim 4, wherein the air guide structure (300) further comprises a first protective mesh (304) and/or a first filter and/or a first louver mounted at the air inlet of the air guide hood (301).

9. The energy storage apparatus (1000) according to claim 4, wherein in a case that the air guide hood (301) is mounted on the energy storage device (200), at least a bottom of two ends of the air guide hood (301) is provided with a sewage outlet, and an openable and closable sewage discharge door (303) is hermetically mounted at the sewage outlet.

10. The energy storage apparatus (1000) according to any one of claims 1 to 3, wherein the air guide structure (300) comprises an air shield plate (305) arranged on the energy storage device (200), wherein
the air shield plate (305) is configured to separate the air inlet of the energy storage device (200) having the air shield plate (305) from the air outlet of the energy storage device (200) having the air shield plate (305) or the air outlet of the adjacent energy storage device (200).
